# EUROPÄISCHE PATENTSCHRIFT

(11) **EP 1 445 143 B1**
(45) Veröffentlichungstag und Bekanntmachung des Hinweises auf die Patenterteilung: **04.08.2010**
(21) Anmeldenummer: 03027245.4
(22) Anmeldetag: 28.11.2003
(51) Int. Cl.: B60K 17/346

(54) **Antriebsvorrichtung**
Drive apparatus
Dispositif d'entrâinement

(30) Priorität: 06.02.2003 DE 10304808
(43) Veröffentlichungstag der Anmeldung: 11.08.2004
(73) Patentinhaber: AUDI AG, 85045 Ingolstadt (DE)
(72) Erfinder: Meixner, Christian, 85049 Ingoldstadt (DE)
(74) Vertreter: Asch, Konrad

(56) Entgegenhaltungen:
- EP-A- 0 396 323
- EP-A- 0 413 436
- EP-A- 0 546 733
- DE-A- 4 111 615
- US-A- 4 805 721
- US-A1- 2002 128 117

## Beschreibung

Die Erfindung betrifft eine Antriebsvorrichtung für allradgetriebene Kraftfahrzeuge, gemäß dem Oberbegriff des Patentanspruches 1.

Allradantriebe sind in einer Vielzahl von Ausführungen bekannt, beispielsweise als permanenter Allradantrieb, als zuschaltbarer Allradantrieb, z. B. über eine Viskokupplung (Scherreibungskupplung), oder mit Antriebsmomentenverteilung mittels einer oder mehrerer elektrohydraulisch steuerbarer Lamellenkupplungen. Sofern bei solchen Allradantrieben eine Antriebsmomentenverteilung erfolgen soll, sind sie jedoch relativ kompliziert und steuerungstechnisch aufwändig ausgeführt. Ferner sind sie nicht bei vertretbarem Aufwand stufenlos variabel von z. B. hecklastig (Antriebsmoment verstärkt auf der Hinterachse) über neutral auf frontlastig umsteuerbar.

Die DE 41 11 615 A offenbart eine Antriebsvorrichtung nach dem Oberbegriff des Anspruchs 1.

Aufgabe der Erfindung ist es, eine Antriebsvorrichtung der gattungsgemäßen Art vorzuschlagen, die mit relativ geringem baulichen und steuerungstechnischem Aufwand eine stufenlos variable Antriebsmomentenverteilung auf die vorderen und hinteren Räder des Kraftfahrzeuges ermöglicht.

Diese Aufgabe wird erfindungsgemäß mit den kennzeichnenden Merkmalen des Patentanspruches 1 gelöst. Vorteilhafte Weiterbildungen der erfindungsgemäßen Antriebsvorrichtung beschreiben die weiteren Patentansprüche.

Die Lösung der gestellten Aufgabe basiert auf den folgenden Merkmalen:
- zwischen das Antriebselement des Zwischenachsdifferenziales und das mit dem vorderen Achsdifferenzial trieblich verbundene Abtriebselement ist eine schlupfgesteuerte Lamellenkupplung eingeschaltet;
- das Abtriebselement treibt über eine Zwischenwelle und eine Übersetzungsstufe die parallel dazu angeordnete Abtriebswelle an; und
- ein Element der Lamellenkupplung ist mit einer weiteren Übersetzungsstufe mit zur ersten Übersetzungsstufe unterschiedlichem Übersetzungsverhältnis mit der Abtriebswelle (Fig. 1 und 2) oder mit dem Antriebselement (Fig. 3 und 4) des Zwischenachsdifferenziales gekoppelt.

Durch die beschriebenen Merkmale kann unter Verwendung nur einer schlupfgesteuerten Kupplung stufenlos variabel das Abtriebsmoment vom Zwischenachsdifferenzial zu den Achsdifferenzialen (= Antriebsmoment der Achsen) ausgehend von der konstruktiv vorgegebenen Grundverteilung (z. B. 70:30) in Neutral (50:50) und in eine umgekehrte Lastigkeit (z. B. 30:70 oder mehr) umgesteuert werden. Dabei ist es wesentlich, dass neben der konstruktiv vorgegebenen Momentenverteilung des Zwischenachsdifferenziales durch die unterschiedlichen Übersetzungsverhältnisse der Übersetzungsstufen die Kupplungselemente zueinander unterschiedliche Drehzahlen aufweisen. Dementsprechend kann durch entsprechende Schlupfsteuerung zunehmend Abtriebsmoment über die Lamellenkupplung auf die angekoppelte Abtriebswelle übertragen werden und somit die Grundverteilung steuerungstechnisch einfach und schnell in Richtung neutral und umgekehrte Momentenverteilung gesteuert werden.

Die schlupfgesteuerte Lamellenkupplung könnte eine Viskokupplung sein, die geschwindigkeitsabhängig die Abtriebsmomentenverteilung beeinflusst. Bevorzugt wird jedoch vorgeschlagen, diese Steuerung abhängig von Betriebsparametern des Kraftfahrzeuges wie beispielsweise Geschwindigkeit, Fahrbahn-Zustand, -Steigungen oder -Gefälle, Schaltzustand des Wechselgetriebes etc. durchzuführen. Die Lamellenkupplung kann dabei in bekannter Weise hydraulisch betätigt und gekühlt sein, wobei entsprechende Steuerventile über ein elektronisches Steuergerät beaufschlagt werden.

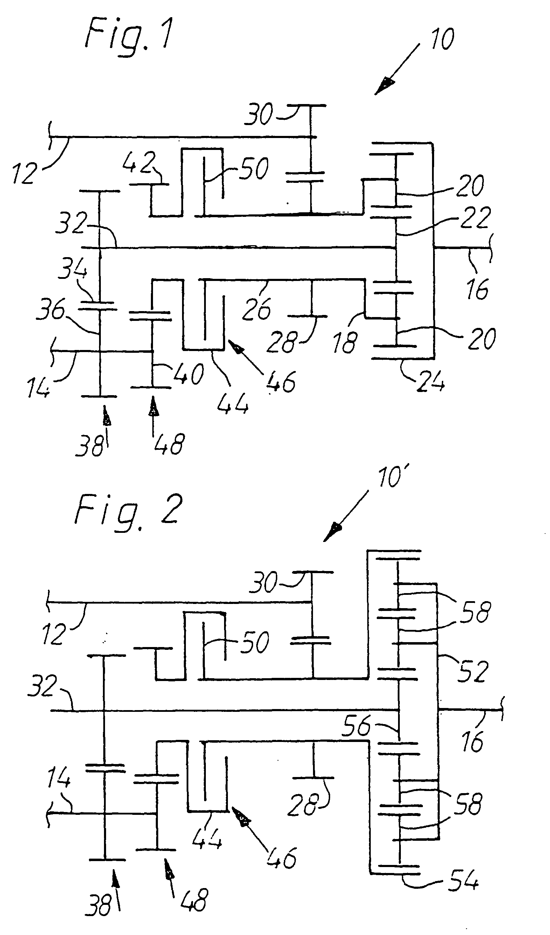

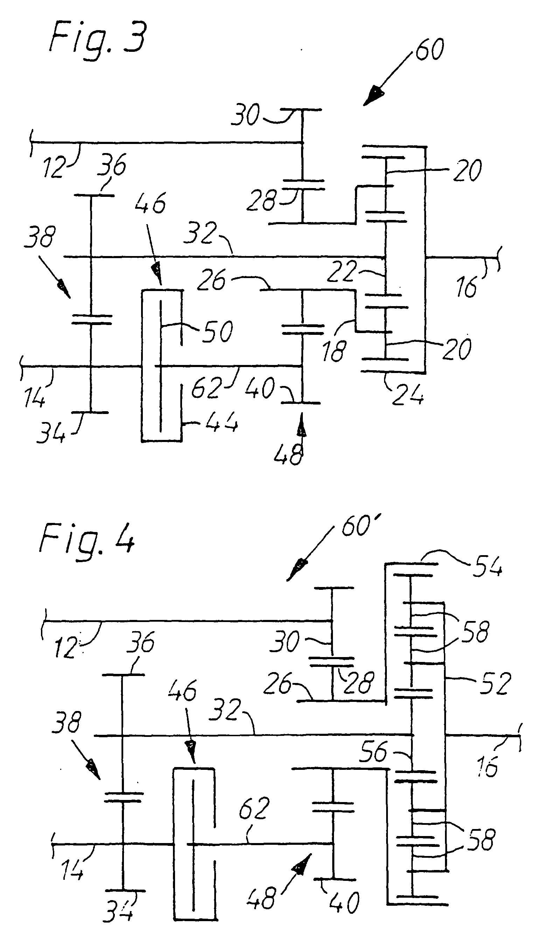

Bevorzugt wird ferner vorgeschlagen, dass das höhere Abtriebsmoment auf das die hinteren Räder des Kraftfahrzeuges antreibenden Achsdifferenzial geschaltet ist und dass die weitere Übersetzungsstufe dem abtreibenden Element der Lamellenkupplung eine geringere Drehzahl als die der Zwischenwelle aufprägt (Fig. 1 und 2) oder dass die weitere Übersetzungsstufe dem antreibenden Element der Lamellenkupplung eine höhere Drehzahl als die der Abtriebswelle (Fig. 3. und 4) aufprägt. Damit ist eine hecklastige Grundverteilung geschaffen, die insbesondere bei sportlich ausgelegten Kraftfahrzeugen fahrdynamische Vorteile bieten kann und die bei Bedarf jederzeit entsprechend variabel auf neutral und frontlastig veränderbar ist.

Das Zwischenachsdifferenzial kann ein unsymmetrisch ausgelegtes Kegelraddifferenzial oder bevorzugt ein hinsichtlich der Abtriebsmomentenverteilung besser beherrschbares Planetengetriebe sein.

Eine baulich besonders gedrängte und hinsichtlich der Kombination mit einem herkömmlich allradgetriebenem Kraftfahrzeug eine problemlose Erweiterung zu einem variabel steuerbaren Allradantrieb ergebende Konstruktion ist dadurch gekennzeichnet, dass die Antriebswelle des Wechselgetriebes des Kraftfahrzeuges über eine Vorgelegestufe und eine Hohlwelle das Antriebselement des Zwischenachsdifferenziales antreibt und dass die Zwischenwelle durch die Hohlwelle hindurch verläuft. Daraus resultiert eine Art Package-Lösung, die ausgehend von einem herkömmlichen Wechselgetriebe des Kraftfahrzeuges mit seitlich angebautem oder in das Wechselgetriebe integrierte Vorderachs-Differenzial und einem Zwischenachsdifferenzial nur durch Austausch des modifizierten Zwischenachsdifferenziales mit integrierter schlupfgesteuerter Lamellenkupplung einen Allradantrieb mit stufenlos variabler Antriebsmomentenverteilung ermöglicht.

Dabei kann zur Erzielung einer günstigen Abtriebsmomentenverteilung des Zwischenachsdifferenziales das Antriebselement des Planetengetriebes der Planetenradträger sein, während die Abtriebselemente durch das Sonnenrad und das Außenrad gebildet sind.

Abhängig von den baulichen Gegebenheiten kann die Lamellenkupplung baulich zwischen den beiden Übersetzungsstufen einerseits und dem Vorgelege andererseits koaxial zur Hohlwelle angeordnet sein, oder alternativ zwischen den beiden Übersetzungsstufen und koaxial zur Abtriebswelle zum vorderen Achsdifferenzial positioniert sein.

Des weiteren ist bevorzugt das Außenrad des Planetengetriebes mit dem höheren Abtriebsmoment mit dem Achsdifferenzial für den Antrieb der hinteren Räder des Kraftfahrzeuges trieblich verbunden, wodurch eine besonders günstige Abtriebsmomentenverteilung innerhalb des Zwischenachsdifferenziales bei baulich einfacher Gestaltung und Anordnung des betreffenden Planetengetriebes vorliegt.

Alternativ kann das Planetengetriebe ein Doppelplanetengetriebe sein, dessen radial innenliegende Planetenräder mit dem Sonnenrad und dessen außenliegende Planetenräder mit dem Außenrad kämmen, wobei zudem das Außenrad das Antriebselement bildet und das Abtriebselement zum hinteren Achsdifferenzial der Planetenradträger ist. Damit lässt sich bei relativ geringem Mehraufwand eine noch stärker differierende Grundverteilung des Abtriebsmomentes herstellen, die die Gesamtverstellbarkeit des Allradantriebes vorteilhaft zur noch besseren Anpassung an fahrdynamische Erfordernisse des Kraftfahrzeuges erweitert.

Bei entsprechenden steuerungstechnischen Maßnahmen z. B. über ein elektronisches Steuergerät und eine elektrohydraulische Steuerung der Lamellenkupplung kann diese abhängig von Betriebsparametern und/oder Fahrdynamikparametern so schlupfgesteuert sein, dass das Abtriebsmoment des Zwischenachsdifferenziales stufenlos von der konstruktiv vorgegebenen Abtriebsmomentenverteilung mit Vorrang zum einen Achsdifferenzial über eine neutrale Verteilung in eine Abtriebsmomentenverteilung mit Vorrang zum anderen Achsdifferenzial verstellbar ist.

Dabei können bevorzugt die Betriebsparameter mehrere elektronisch abgelegte Fahrprogramme eines automatischen Geschwindigkeits-Wechselgetriebes des Kraftfahrzeuges sein, bei deren Vorwählen unterschiedliche Abtriebsmomentenverteilungen des Zwischenachsdifferenziales durch entsprechende Ansteuerung der Lamellenkupplung vorgegeben sind. So kann beispielsweise bei einem Winterprogramm grundsätzlich mehr Antriebsmoment zu den Vorderrädern des Kraftfahrzeuges und bei einem Sportprogramm mehr Antriebsmoment zu den Hinterrädern gesteuert sein.

Des weiteren können besonders vorteilhaft modifizierte Fahrdynamik-Parameter in einem Steuergerät eines elektronischen Fahrstabilitätsprogrammes des Kraftfahrzeuges abgelegt sein und neben den bekannten Eingriffen wie Bremseneingriff und Antriebsmomentverringerung der Antriebsmaschine durch entsprechende zusätzliche Ansteuerung der Lamellenkupplung die Abtriebsmomentenverteilung des Zwischenachsdifferenziales in Richtung neutral und darüber hinaus verändern.

Ein Ausführungsbeispiel der Erfindung ist im Folgenden mit weiteren Einzelheiten näher beschrieben.

Die anliegende schematische Zeichnung zeigt in:
- **Fig. 1**: ein Blockschaltbild einer Antriebsvorrichtung für ein allradgetriebenes Kraftfahrzeug, mit einem Zwischenachsdifferenzial mit einem einfachen Planetengetriebe und einer schlupfgesteuerten Lamellenkupplung an einer mit dem Antriebselement des Planetengetriebes verbundenen Hohlwelle;
- **Fig. 2**: ein modifiziertes Zwischenachsdifferenzial gemäß Fig. 1 mit einem Doppelplanetengetriebe;
- **Fig. 3**: ein weiteres Zwischenachsdifferenzial mit einem einfachen Planetengetriebe und einer schlupfgesteuerten Lamellenkupplung koaxial zur vorderen Abtriebswelle; und
- **Fig. 4**: ein modifiziertes Zwischenachsdifferenzial gemäß Fig. 3, wiederum mit einem Doppelplanetengetriebe.

In der **Fig. 1** ist mit 10 ein erstes Zwischenachsdifferenzial als Teil einer Antriebsvorrichtung für einen Allradantrieb an einem Kraftfahrzeug bezeichnet, das in einem entsprechenden Gehäuse (nicht dargestellt) angeordnet und drehbar gelagert ist und das z. B. an ein Geschwindigkeits-Wechselgetriebe eines Kraftfahrzeuges integriert oder angebaut ist.

Das Zwischenachsdifferenzial 10 weist eine Antriebswelle 12 auf, die zugleich die Abtriebswelle des Wechselgetriebes ist. Das Wechselgetriebe kann im übrigen ein von einer Brennkraftmaschine angetriebenes Schaltgetriebe, ein automatisches Stufengetriebe oder ein automatisches stufenloses Getriebe sein.

Ferner ist eine erste Abtriebswelle 14 vorgesehen, die mit einem vorderen Achsdifferenzial (nicht dargestellt) zum Antrieb der vorderen Räder des Kraftfahrzeuges trieblich verbunden ist; eine weitere Abtriebswelle 16 treibt beispielsweise über eine Kardanwelle das hintere Achsdifferenzial (ebenfalls nicht dargestellt) des allradgetriebenen Kraftfahrzeuges an.

Das Zwischenachsdifferenzial 10 ist als einfaches Planetengetriebe ausgebildet, mit einem Planetenradträger 18 als Antriebselement, der über die Planetenräder 20 mit dem außenverzahnten Sonnenrad 22 und dem innenverzahnten Außenrad 24 trieblich verbunden ist.

Der Planetenradträger 18 ist fest auf einer Hohlwelle 26 angeordnet, die ein Zahnrad 28 trägt. Das Zahnrad 28 kämmt mit einem Zahnrad 30 auf der Antriebswelle 12, so dass eine einen seitlichen Versatz herstellende Vorgelegestufe geschaffen ist.

Das Sonnenrad 22 ist ferner mit einer durch die Hohlwelle 26 hindurch verlaufenden Zwischenwelle 32 fest verbunden, wobei die Zwischenwelle 32 an ihrem anderen Ende ein Zahnrad 34 trägt, das mit einem Zahnrad 36 auf der Abtriebswelle 14 eine erste Übersetzungsstufe 38 bildet.

Die Abtriebswelle 14 trägt des weiteren ein zweites Zahnrad 40, das mit einem Zahnrad 42 an dem Kupplungsgehäuse 44 einer koaxial zur Hohlwelle 26 angeordneten, schlupfgesteuerten Lamellenkupplung 46 kämmt; die beiden Zahnräder 40, 42 bilden eine zweite Übersetzungsstufe 48, deren Übersetzungsverhältnis geringfügig ungleich zum Übersetzungsverhältnis der ersten Übersetzungsstufe 38 ist.

Die Kupplungslamellen 50 (der Einfachheit halber ist nur eine Kupplungslamelle dargestellt) der Lamellenkupplung 46 sind drehfest mit der Hohlwelle 26 verbunden.

Die Auslegung des Zwischenachsdifferenziales 10 bzw. dessen Planetengetriebes ist so, dass in der konstruktiven Grundverteilung auf die Abtriebswelle 16 zu dem hinteren Achsdifferenzial ein höheres Abtriebsmoment (70 %) und auf die Abtriebswelle 14 zum vorderen Achsdifferenzial ein niedrigeres Abtriebsmoment (30 %) abgetrieben wird.

Die Lamellenkupplung 46 ist in nicht dargestellter und für sich bekannter Weise elektrohydraulisch (oder elektrisch) schlupfgesteuert betätigt und bewirkt eine stufenlos variable Veränderung der vorgegebenen Abtriebsmomentenverteilung des Zwischenachsdifferenziales 10.

Bei voll geöffneter Lamellenkupplung 46 ist diese ohne Einfluss und das Abtriebsmoment des Zwischenachsdifferenziales 10 ist wie vorgenannt mit Vorrang auf die hinteren Räder des Kraftfahrzeuges. Die Abtriebsübersetzungen im Abtrieb zu den vorderen und hinteren Rädern des Kraftfahrzeuges sind so, dass sich die Abtriebselemente 22, 24 des Planetengetriebes 1:1 drehen, also mit gleicher Drehzahl. Aufgrund der unterschiedlichen Übersetzungsverhältnisse an den beiden Übersetzungsstufen 38, 48 bzw. aufgrund des höheren Übersetzungsverhältnisses der Übersetzungsstufe 48 drehen die mit der Hohlwelle 26 umlaufenden Kupplungslamellen 50 schneller als das mit der Abtriebswelle 14 gekoppelte Kupplungsgehäuse 44.

Soll die Abtriebsmomentenverteilung des Zwischenachsdifferenziales 10 aufgrund definierter, noch zu beschreibender Betriebsparameter des Kraftfahrzeuges von der hecklastigen Grundverteilung von z. B. 70:30 auf neutral (50:50) oder auf frontlastig (z. B. 30:70) stufenlos verändert werden, so wird die Lamellenkupplung 46 zunehmend (aber stets im Schlupfbereich) geschlossen, wodurch aufgrund der vorliegenden Drehzahldifferenz Abtriebsmoment zunehmend von der Hohlwelle 26 auf die Abtriebswelle 14 übertragen wird.

Die Schlupfsteuerung oder Schlupfregelung der Lamellenkupplung 46 erfolgt über ein nicht dargestelltes elektronisches Steuergerät, welches abhängig von Betriebs- und Fahrdynamik-Parametern den Kupplungsschlupf zur variablen Veränderung der Abtriebsmomente des Zwischenachsdifferenziales 10 steuert, wobei das Steuergerät eine entsprechende hydraulische Betätigungseinrichtung mit einer Druckmittelquelle und einem Stellzylinder ansteuert.

Das Steuergerät wertet dabei u.a. sowohl Signale von einem Fahrprogramm-Wählschalter des Wechselgetriebes als auch Signale von einem Steuergerät eines Fahrstabilitätsprogrammes des Kraftfahrzeuges derart aus, dass bei einem Einlegen eines Sportprogrammes des gegebenenfalls automatischen Wechselgetriebes eine größere Hecklastigkeit des Allradantriebs (geringerer Schlupfeingriff der Lamellenkupplung 46) vorliegt als beispielsweise bei einem Winterprogramm mit entsprechend angenommener vorsichtigerer Fahrweise bei mehr neutraler Momentenverteilung.

Neben dem Bremseneingriff und/oder einer Antriebsmomentenreduzierung an der Brennkraftmaschine kann das Fahrstabilitätsprogramm bzw. dessen Steuergerät ebenfalls in die Schlupfsteuerung der Lamellenkupplung 46 eingreifen und bei beginnender Instabilität des Kraftfahrzeuges (erkennbar z. B. über einen Gierwinkelsensor des Fahrstabilitätsprogrammes) die Abtriebsmomentenverteilung des Zwischenachsdifferenziales 10 in Richtung neutral schnell und wirkungsvoll verändern.

Gleiches gilt auch für Fahrbahnbeschaffenheiten, Fahrgeschwindigkeit, Brems- und/oder Beschleunigungszustände, etc. des Kraftfahrzeuges.

Bei dem Zwischenachsdifferenzial 10' gemäß Fig. 2 ist anstelle des einfachen Planetengetriebes ein Doppelplanetengetriebe wie folgt verwendet. Gleiche Teile sind mit gleichen Bezugszeichen versehen.

Dabei ist die Abtriebswelle 16 für den Antrieb des hinteren Achsdifferenziales mit dem Planetenträger 52 als dem einen Ausgangselement des Doppelplanetengetriebes trieblich verbunden.

Des weiteren sind die Hohlwelle 26 und das Zahnrad 28 der Vorgelegestufe 28, 30 mit dem Außenrad 54 als Antriebselement des Doppelplanetengetriebes verbunden, während das Sonnenrad 56 als weiteres Abtriebselement unverändert auf die Zwischenwelle 32 treibt.

Der Planetenradträger 52 trägt auf entsprechenden Drehzapfen radial zueinander versetzte und miteinander kämmende Planetenräder 58, von denen die radial innenliegenden Planetenräder 58 mit dem Sonnenrad 56 und die radial außenliegenden Planetenräder 58 mit dem Außenrad 54 kämmen.

Dies ermöglicht in an sich bekannter Weise eine stärkere Differenz in der Abtriebsmomentenverteilung des Zwischenachsdifferenziales 10' und einen damit beträchtlich erweiterten Verstellbereich des variablen Abtriebsmomentes. Im übrigen ist die Funktion des Zwischenachsdifferenziales 10' wie vorbeschrieben.

Die **Fig. 3** zeigt ein Zwischenachsdifferenzial 60 einer alternativen Antriebsvorrichtung. Funktionell gleiche Teile sind mit gleichen Bezugszeichen versehen. Das Zwischenachsdifferenzial 60 ist ferner nur soweit beschrieben, als es sich von dem Zwischenachsdifferenzial 10 gemäß Fig. 1 wesentlich unterscheidet.

Dabei ist die schlupfgesteuerte Lamellenkupplung 46 auf einer koaxial zur Abtriebswelle 14 angeordneten Welle 62 angeordnet, wobei deren Gehäuse 44 mit der Abtriebswelle 14 und deren Kupplungslamellen 50 mit der Welle 62 trieblich verbunden sind.

Die Übersetzungsstufe 48 setzt sich zusammen aus dem Zahnrad 40 auf der Welle 62 und dem Zahnrad 28, welches zugleich Teil der Vorgelegestufe 28, 30 von der Antriebswelle 12 zur Hohlwelle 26 ist. Das Zahnrad 42 gemäß Fig.1 kann dementsprechend entfallen.

Wesentlich ist wiederum, dass die beiden Übersetzungsstufen 38, 48 wie vorbeschrieben ein unterschiedliches Übersetzungsverhältnis aufweisen, um die für die variable Abtriebsmomentenverteilung notwendige Drehzahldifferenz an den Kupplungselementen 44, 50 der Lamellenkupplung 46 herzustellen.

Hinsichtlich der weiteren Funktion des Zwischenachsdifferenziales 60 wird auf die vorstehenden Ausführungen zur **Fig. 1** verwiesen.

Die **Fig. 4** schließlich zeigt ein Zwischenachsdifferenzial 60', bei dem wiederum anstelle eines einfachen Planetengetriebes gemäß **Fig. 3** ein Doppelplanetengetriebe gemäß **Fig. 2** verwendet ist. Funktionell gleiche Teile sind mit gleichen Bezugszeichen versehen.

Wie ersichtlich ist, ist bei dem Zwischenachsdifferenzial 60'die Lamellenkupplung 46 zwischen den beiden Übersetzungsstufen 38, 48 in Verbindung mit der zusätzlichen Welle 62 angeordnet. Ferner treibt die Antriebswelle 12 über das Vorgelege 30, 28 und die Hohlwelle 26 auf das Außenrad 54 als Antriebselement des Doppelplanetengetriebes. Als Abtriebselemente wirken wie bei der **Fig. 2** das Sonnenrad 56 und der Planetenradträger 52 mit den Planetenrädern 58.

Die Erfindung ist nicht auf die beschriebenen Ausführungsbeispiele beschränkt. Beispielsweise kann die Schlupfsteuerung der Lamellenkupplung 46 auch als Differenzialsperre eingesetzt sein, jedoch muss ein Restschlupf an der Lamellenkupplung 46 zur Aufrechterhaltung der vorgegebenen Drehzahldifferenz an der Lamellenkupplung 46 stets sichergestellt sein.

## Patentansprüche

1. Antriebsvorrichtung für allradgetriebene Kraftfahrzeuge, mit einem Geschwindigkeits-Wechselgetriebe und einem Zwischenachsdifferenzial (10,60) zur Abtriebsmomentenverteilung auf ein erstes und ein zweites Achsdifferenzial, über die die Vorderräder und die Hinterräder des Kraftfahrzeuges angetrieben werden, wobei eine Abtriebswelle des Wechselgetriebes als Antriebswelle (12) ein Antriebselement (18,54) des Zwischenachsdifferenziales (10, 60) antreibt und Abtriebselemente (22, 56) des Zwischenachsdifferenziales (10, 60) mit den Achsdifferenzialen trieblich verbunden sind und wobei eine die Abtriebsmomentenverteilung beeinflussende Kupplung (46) vorgesehen ist, wobei die Auslegung des Zwischenachsdifferenziales (10; 60) so ist, dass unterschiedliche Abtriebsmomente zu den Achsdifferenzialen vorliegen; **gekennzeichnet durch** Folgende Merkmale:
- zwischen das Antriebselement (18; 54) des Zwischenachsdifferenziales (10; 60) und das mit dem vorderen Achsdifferenzial trieblich verbundene Abtriebselement (22, 56) des Zwischenachsdifferenziales ist eine schlupfgesteuert Lamellenkupplung (46) eingeschaltet;
- das mit dem vorderen Achsdifferenzial trieblich verbundene Abtriebselement des Zwischenachsdifferenziale (22; 56) treibt über eine Zwischenwelle (32) und eine Übersetzungsstufe (38) die parallel dazu angeordnete Abtriebswelle (14) an; und
- ein Element (44; 50) der Lamellenkupplung (46) ist mit einer weiteren Übersetzungsstufe (48) mit zur ersten Übersetzungsstufe (38) unterschiedlichem Übersetzungsverhältnis mit der Abtriebswelle (14 ) oder mit dem Antriebselement (18; 54) des Zwischenachsdifferenziales (10; 60) gekoppelt.

2. Antriebsvorrichtung nach Anspruch 1, **dadurch gekennzeichnet, dass** die Lamellenkupplung (46) abhängig von Betriebsparametern des Kraftfahrzeuges zur variablen Verteilung der Abtriebsmomente des Zwischenachsdifferenziales (10; 60) steuerbar ist.

3. Antriebsvorrichtung nach den Ansprüchen 1 und 2, **dadurch gekennzeichnet, dass** das höhere Abtriebsmoment auf das die hinteren Räder des Kraftfahrzeuges antreibende Achsdifferenzial geschaltet ist und dass die weitere Übersetzungsstufe (48) dem abtreibenden Element (44) der Lamellenkupplung (46) eine geringere Drehzahl als die der Zwischenwelle (32) aufprägt, oder dass die weitere Übersetzungsstufe (48) dem antreibenden Element (50) der Lamellenkupplung (46) eine höhere Drehzahl als die der Abtriebswelle (14) aufprägt.

4. Antriebsvorrichtung nach den Ansprüchen 1 bis 3, **dadurch gekennzeichnet, dass** das Zwischenachsdifferenzial (10; 60) ein Planetengetriebe ist.

5. Antriebsvorrichtung nach einem oder mehreren der vorhergehenden Ansprüche, **dadurch gekennzeichnet, dass** die Antriebswelle (12) des Wechselgetriebes des Kraftfahrzeuges über eine Vorlegestufe (30, 28) und eine Hohlwelle (26) das Antriebselement (18; 54) des Zwischenachsdifferenziales (10; 60) antreibt und dass die Zwischenwelle (32) durch die Hohlwelle (26) hindurch verläuft.

6. Antriebsvorrichtung nach einem oder mehreren der Ansprüche 1 bis 5, **dadurch gekennzeichnet, dass** das Antriebselement des Planetengetriebes der Planetenradträger (18) ist und dass die Abtriebselemente durch das Sonnenrad (22) und das Außenrad (24) gebildet sind.

7. Antriebsvorrichtung nach einem oder mehreren der vorhergehenden Ansprüche, **dadurch gekennzeichnet, dass** die Lamellenkupplung (46) baulich zwischen den beiden Übersetzungsstufen (38, 48) einerseits und dem Vorgelege (30, 28) andererseits koaxial zur Hohlwelle (26) angeordnet ist.

8. Antriebsvorrichtung nach einem oder mehreren der Ansprüche 1 bis 6, **dadurch gekennzeichnet, dass** die Lamellenkupplung (46) zwischen den beiden Übersetzungsstufen (38, 48) koaxial zur Abtriebswelle (14) zum vorderen Achsdifferenzial angeordnet ist.

9. Antriebsvorrichtung nach einem oder mehreren der Ansprüche 1 bis 8, **dadurch gekennzeichnet, dass** das Außenrad (24) des Planetengetriebes (10; 60) mit dem höheren Abtriebsmoment mit dem Achsdifferenzial für den Antrieb der hinteren Räder des Kraftfahrzeuges trieblich verbunden ist.

10. Antriebsvorrichtung nach einem oder mehreren der vorhergehenden Ansprüche, **dadurch gekennzeichnet, dass** das Planetengetriebe ein Doppelplanetengetriebe ist, dessen radial innenliegende Planetenräder (58) mit dem Sonnenrad (56) und dessen außenliegende Planetenräder (58) mit dem Außenrad (54) kämmen, dass ferner das Außenrad (54) das Antriebselement bildet und dass das Abtriebselement zum hinteren Achsdifferenzial der Planetenradträger (52) ist.

11. Antriebsvorrichtung nach einem oder mehreren der vorhergehenden Ansprüche, **dadurch gekennzeichnet, dass** die schlupfgesteuerte Lamellenkupplung (46) abhängig von Betriebsparametern und/oder Fahrdynamikparametern so gesteuert ist, dass das Abtriebsmoment des Zwischenachsdifferenziales stufenlos von der konstruktiv vorgegebenen Abtriebsmomentenverteilung mit Vorrang zum einen Achsdifferenzial über eine neutrale Verteilung in eine Abtriebsmomentenverteilung mit Vorrang zum anderen Achsdifferenzial verstellbar ist.

12. Antriebsvorrichtung nach einem oder mehreren der vorhergehenden Ansprüche, **dadurch gekennzeichnet, dass** die Betriebsparameter mehrere elektronisch abgelegte Fahrprogramme eines automatischen Geschwindigkeits-Wechselgetriebes des Kraftfahrzeuges sind, bei deren Vorwählen unterschiedliche Abtriebsmomentenverteilungen des Zwischenachsdifferenziales (10; 60) durch entsprechende Ansteuerung der Lamellenkupplung (46) vorgegeben sind.

13. Antriebsvorrichtung nach einem oder mehreren der vorhergehenden Ansprüche, **dadurch gekennzeichnet, dass** die Fahrdynamik-Parameter in einem elektronischen Fahrstabilitätsprogramm des Kraftfahrzeuges abgelegt sind und dass neben den bekannten Eingriffen wie Bremseneingriff und Antriebsmomentverringerung der Antriebsmaschine durch entsprechende zusätzliche Ansteuerung der Lamellenkupplung (46) die Abtriebsmomentenverteilung des Zwischenachsdifferenziales (10; 60) in Richtung neutral und ggf. darüber hinaus verändert wird.

## Claims

1. Drive device for all-wheel-drive motor vehicles, having a variable-speed gearbox and having an interaxle differential (10, 60) for drive output torque distribution between a first and a second axle differential via which the front wheels and the rear wheels of the motor vehicle are driven, with a drive output shaft of the gear change box as a drive input shaft (12) driving a drive input element (18, 54) of the interaxle differential (10, 60) and with drive output elements (22, 56) of the interaxle differential (10, 60) being drive-connected to the axle differentials and with a clutch (46) being provided which influences the drive output torque distribution, wherein the interaxle differential (10; 60) is designed such that different drive output torques to the axle differentials are present; **characterized by** the following features:
- a slip-controlled multiplate clutch (46) is connected between the drive input element (18; 54) of the interaxle differential (10; 60) and the drive output element (22, 56), which is drive-connected to the front axle differential, of the interaxle differential;
- the drive output element (22; 56), which is drive-connected to the front axle differential, of the interaxle differential drives the drive output shaft (14), which is arranged parallel thereto, via an intermediate shaft (32) and a transmission stage (38); and
- an element (44; 50) of the multiplate clutch (46) is coupled by means of a further transmission stage (48), which has a different transmission ratio than the first transmission stage (38), to the drive output shaft (14) or to the drive input element (18; 54) of the interaxle differential (10; 60).

2. Drive device according to Claim 1, **characterized in that** the multiplate clutch (46) can be controlled as a function of operating parameters of the motor vehicle for the variable distribution of the drive output torques of the interaxle differential (10; 60).

3. Drive device according to Claims 1 and 2, **characterized in that** the higher drive output torque is connected to the axle differential which drives the rear wheels of the motor vehicle, and **in that** the further transmission stage (48) imparts to the drive output element (44) of the multiplate clutch (46) a lower rotational speed than that of the intermediate shaft (32), or **in that** the further transmission stage (48) imparts to the drive input element (50) of the multiplate clutch (46) a higher rotational speed than that of the drive output shaft (14).

4. Drive device according to Claims 1 to 3, **characterized in that** the interaxle differential (10; 60) is a planetary gear set.

5. Drive device according to one or more of the preceding claims, **characterized in that** the drive input shaft (12) of the gear change box of the motor vehicle drives the drive input element (18; 54) of the interaxle differential (10; 60) via a reduction gear stage (30, 28) and a hollow shaft (26), and **in that** the intermediate shaft (32) runs through the hollow shaft (26).

6. Drive device according to one or more of Claims 1 to 5, **characterized in that** the drive input element of the planetary gear set is the planet gear carrier (18) and **in that** the drive output elements are formed by the sun gear (22) and the external gear (24).

7. Drive device according to one or more of the preceding claims, **characterized in that** the multiplate clutch (46) is arranged structurally between the two transmission stages (38, 48) on the one hand and the reduction gear (30, 28) on the other hand and coaxially with respect to the hollow shaft (26).

8. Drive device according to one or more of Claims 1 to 6, **characterized in that** the multiplate clutch (46) is arranged between the two transmission stages (38, 48) and coaxially with respect to the drive output shaft (14) to the front axle differential.

9. Drive device according to one or more of Claims 1 to 8, **characterized in that** the external gear (24) of the planetary gear set (10; 60) with the higher drive output torque is drive-connected to the axle differential for driving the rear wheels of the motor vehicle.

10. Drive device according to one or more of the preceding claims, **characterized in that** the planetary gear set is a double planetary gear set whose radially inner planet gears (58) mesh with the sun gear (56) and whose outer planet gears (58) mesh with the external gear (54), **in that** furthermore the external gear (54) forms the drive input element and **in that** the drive output element to the rear axle differential is the planet gear carrier (52).

11. Drive device according to one or more of the preceding claims, **characterized in that** the slip-controlled multiplate clutch (46) is controlled as a function of operating parameters and/or driving dynamics parameters in such a way that the drive output torque of the interaxle differential can be adjusted in a continuously variable fashion from the structurally predefined drive output torque distribution with precedence given to one axle differential via a neutral distribution into a drive output torque distribution with precedence given to the other axle differential.

12. Drive device according to one or more of the preceding claims, **characterized in that** the operating parameters are a plurality of electronically stored driving programs of an automatic variable-speed gearbox of the motor vehicle, in the event of the pre-selection of which driving programs different drive output torque distributions of the interaxle differential (10; 60) are predefined by means of corresponding actuation of the multiplate clutch (46).

13. Drive device according to one or more of the preceding claims, **characterized in that** the driving dynamics parameters are stored in an electronic driving stability program of the motor vehicle and **in that**, in addition to the known interventions such as braking intervention and drive torque reduction of the drive machine, the drive output torque distribution of the interaxle differential (10; 60) is varied in the direction of a neutral position and possibly beyond said neutral position by means of corresponding additional actuation of the multiplate clutch (46).

## Revendications

1. Dispositif d'entraînement pour véhicules automobiles à toutes roues motrices, comprenant une boîte de vitesses à changement de vitesse et un différentiel intermédiaire (10, 60) pour la répartition des couples de sortie sur un premier et un deuxième différentiel d'essieu, par le biais duquel les roues avant et les roues arrière du véhicule automobile sont entraînées, un arbre d'entraînement de la boîte de vitesses servant d'arbre d'entraînement (12) entraînant un élément d'entraînement (18, 54) du différentiel intermédiaire (10, 60) et des éléments de sortie (22, 56) du différentiel intermédiaire (10, 60) étant connectés par entraînement aux différentiels d'essieu, et un embrayage (46) influençant la répartition des couples de sortie étant prévu, la conception du différentiel intermédiaire (10, 60) étant telle que différents couples de sortie s'appliquent aux différentiels d'essieux, **caractérisé par** les caractéristiques suivantes :
- entre l'élément d'entraînement (18 ; 54) du différentiel intermédiaire (10, 60) et l'élément de sortie (22, 56) du différentiel intermédiaire connecté par entraînement au différentiel d'essieu avant est raccordé un embrayage à disques (46) commandé par glissement ;
- l'élément de sortie (22 ; 56) connecté par entraînement au différentiel d'essieu avant entraîne, par le biais d'un arbre intermédiaire (32) et d'un étage de multiplication (38), l'arbre de sortie (14) disposé parallèlement à celui-ci ; et
- un élément (44 ; 50) de l'embrayage à disques (46) est accouplé avec un autre étage de multiplication (48) avec un rapport de multiplication différent du premier étage de multiplication (38), à l'arbre de sortie (14) ou à l'élément d'entraînement (18 ; 54) du différentiel intermédiaire (10, 60).

2. Dispositif d'entraînement selon la revendication 1, **caractérisé en ce que** l'embrayage à disques (46) peut être commandé en fonction de paramètres de fonctionnement du véhicule automobile en vue de distribuer les couples de sortie du différentiel intermédiaire (10, 60).

3. Dispositif d'entraînement selon les revendications 1 et 2, **caractérisé en ce que** le couple de sortie le plus haut est commuté au différentiel d'essieu entraînant les roues arrière du véhicule automobile et **en ce que** l'étage de multiplication supplémentaire (48) confère à l'élément de sortie (44) de l'embrayage à disques (46) un régime plus faible que celui de l'arbre intermédiaire (32), ou **en ce que** l'étage de multiplication supplémentaire (48) confère à l'élément d'entraînement (50) de l'embrayage à disques (46) un régime supérieur à celui de l'arbre de sortie (14).

4. Dispositif d'entraînement selon les revendications 1 à 3, **caractérisé en ce que** le différentiel intermédiaire (10, 60) est un engrenage planétaire.

5. Dispositif d'entraînement selon l'une quelconque ou plusieurs des revendications précédentes, **caractérisé en ce que** l'arbre d'entraînement (12) de la boîte de vitesses à changement de vitesse du véhicule automobile entraîne l'élément d'entraînement (18 ; 54) du différentiel intermédiaire (10, 60) par le biais d'un étage intermédiaire (30, 28) et d'un arbre creux (26), et **en ce que** l'arbre intermédiaire (32) s'étend à travers l'arbre creux (26).

6. Dispositif d'entraînement selon l'une quelconque ou plusieurs des revendications 1 à 5, **caractérisé en ce que** l'élément d'entraînement de l'engrenage planétaire est le porte-satellites (18) et **en ce que** les éléments de sortie sont formés par la roue solaire (22) et la roue extérieure (24).

7. Dispositif d'entraînement selon l'une quelconque ou plusieurs des revendications précédentes, **caractérisé en ce que** l'embrayage à disques (46) est disposé physiquement entre les deux étages de multiplication (38, 48) d'une part et la transmission intermédiaire (30, 28) d'autre part, coaxialement à l'arbre creux (26).

8. Dispositif d'entraînement selon l'une quelconque ou plusieurs des revendications 1 à 6, **caractérisé en ce que** l'embrayage à disques (46) est disposé entre les deux étages de multiplication (38, 48) coaxialement à l'arbre de sortie (14) vers le différentiel d'essieu avant.

9. Dispositif d'entraînement selon l'une quelconque ou plusieurs des revendications 1 à 8, **caractérisé en ce que** la roue extérieure (24) de l'engrenage planétaire (10 ; 60) avec le plus grand couple de sortie est connectée par entraînement au différentiel d'essieu pour l'entraînement des roues arrière du véhicule automobile.

10. Dispositif d'entraînement selon l'une quelconque ou plusieurs des revendications précédentes, **caractérisé en ce que** l'engrenage planétaire est un double engrenage planétaire, dont les roues planétaires (58) situées radialement à l'intérieur s'engrènent avec la roue solaire (56) et dont les roues planétaires (58) situées à l'extérieur s'engrènent avec la roue extérieure (54), **en ce qu'**en outre la roue extérieure (54) forme l'élément d'entraînement et **en ce que** l'élément de sortie vers le différentiel d'essieu est le porte-satellites (52).

11. Dispositif d'entraînement selon l'une quelconque ou plusieurs des revendications précédentes, **caractérisé en ce que** l'embrayage à disques (46) commandé par glissement est commandé en fonction de paramètres de fonctionnement et/ou de paramètres de dynamique de conduite de telle sorte que le couple de sortie du différentiel intermédiaire puisse être réglé en continu depuis la répartition de couple de sortie prédéfinie par la construction avec priorité vers un différentiel d'essieu, par le biais d'une répartition neutre dans une répartition de couple de sortie avec priorité vers l'autre différentiel d'essieu.

12. Dispositif d'entraînement selon l'une quelconque ou plusieurs des revendications précédentes, **caractérisé en ce que** les paramètres de fonctionnement sont plusieurs programmes de conduite enregistrés sous forme électronique d'une boîte de vitesses à changement de vitesse automatique du véhicule automobile, dont les présélections permettent de prédéfinir différentes répartitions de couples de sortie du différentiel intermédiaire (10, 60) par commande correspondante de l'embrayage à disques (46).

13. Dispositif d'entraînement selon l'une quelconque ou plusieurs des revendications précédentes, **caractérisé en ce que** les paramètres de dynamique de conduite sont enregistrés dans un programme électronique de stabilité de conduite du véhicule automobile et **en ce qu'**en plus des interventions connues comme l'action de freinage et la réduction du couple d'entraînement du moteur d'entraînement par commande supplémentaire correspondante de l'embrayage à disques (46), la répartition des couples de sortie du différentiel intermédiaire (10, 60) est modifiée dans le sens de la neutralité et éventuellement au-delà.
